(19) Europäisches Patentamt
European Patent Office
Office européen des brevets

(11) **EP 1 462 293 B1**

(12) **EUROPEAN PATENT SPECIFICATION**

(45) Date of publication and mention
of the grant of the patent:
**14.11.2007 Bulletin 2007/46**

(51) Int Cl.:
***B60K 31/04*** *(2006.01)*

(21) Application number: **04007237.3**

(22) Date of filing: **25.03.2004**

(54) **Control apparatus for vehicle**

Fahrzeugsteuerung

Commande d'un véhicule

(84) Designated Contracting States:
**CZ DE FR GB IT**

(30) Priority: **28.03.2003 JP 2003091127**

(43) Date of publication of application:
**29.09.2004 Bulletin 2004/40**

(73) Proprietor: **Toyota Jidosha Kabushiki Kaisha
Toyota-shi, Aichi-ken, 471-8571 (JP)**

(72) Inventors:
• **Otsubo, Masaaki
c/o Toyota Jidosha Kabushiki Kaisha
Aichi-ken, 471-8571 (JP)**

• **Shirai, Takao
c/o Toyota Jidosha Kabushiki Kaisha
Aichi-ken, 471-8571 (JP)**

(74) Representative: **TBK-Patent
Bavariaring 4-6
80336 München (DE)**

(56) References cited:
**US-A- 4 899 623        US-A- 5 307 711
US-A- 5 876 301        US-A1- 2002 165 655**

**Description**

## BACKGROUND OF THE INVENTION

### 1. Field of the Invention

The invention relates to a control apparatus for a vehicle which includes an automatic clutch mechanism which interrupts and allows power transmission from an engine to a drive train.

### 2. Description of the Related Art

In order to allow and interrupt power transmission from an engine such as an internal combustion engine to a drive train such as a transmission, a clutch mechanism is provided between the engine and the drive train. In general, the clutch mechanism is operated when a vehicle operator operates a clutch pedal. However, in recent years, it has become possible to automatically operate the clutch mechanism using an actuator or the like.

Meanwhile, a vehicle speed is generally increased or decreased according to an operation amount of an accelerator pedal or the like. However, a vehicle speed control apparatus which automatically controls the vehicle speed without depending on the operation amount of the accelerator pedal, that is, a so-called cruise control apparatus is known. The vehicle control apparatus controls an output of an engine such as an internal combustion engine based on a deviation between a target vehicle speed set by a driver and an actual vehicle speed, thereby maintaining the vehicle speed in the vicinity of the target vehicle speed while the vehicle is running.

Japanese Patent Laid-Open Publication No. 2001-200866 discloses an example of a control apparatus which is applied to a vehicle having such an automatic clutch mechanism, and that automatically controls a vehicle speed of the vehicle. This apparatus calculates engagement torque of an automatic clutch mechanism based on an accelerator opening converted from a throttle opening while the cruise control is performed. More specifically, this apparatus calculates a driving amount of an actuator which drives the clutch mechanism during the cruise control. Thus, it is possible to calculate engagement torque corresponding to the throttle opening that is controlled irrespective of the accelerator opening, that is, engagement torque corresponding to the output of the engine during the cruise control, whereby slip of the clutch or the like is prevented during the cruise control.

When shifting of a transmission installed in the vehicle is performed, the aforementioned automatic clutch mechanism interrupts and allows power transmission. At this time, a control of increasing/decreasing the output of the engine is performed, together with the aforementioned control of engagement torque. In the control, the output of the engine is decreased while power transmission is interrupted, and the output of the engine is increased while the clutch mechanism is being engaged so as to allow power transmission.

When the automatic clutch mechanism is disengaged while the aforementioned cruise control is performed, the following situation may occur. For example, when the vehicle runs on an ascending slope or the like, and the vehicle speed decreases at a speed at which downshifting of the transmission is required, downshifting is performed and power transmission is interrupted by the automatic clutch mechanism. Since the output of the engine is not transmitted to driving wheels at this time, the actual vehicle speed cannot be controlled even if the output of the engine is controlled. Therefore, it is not possible to make the actual vehicle speed close to the target vehicle speed even if the output of the engine is controlled based on the deviation between the actual vehicle speed and the target vehicle speed. Thus, the output of the engine may be excessively increased. When the clutch mechanism starts to be engaged while the output of the engine is excessive, the excessive output is transmitted to the driving wheels. Thus, an excessive change in the vehicle speed may occur even while the cruise control is performed.

US-A-4899623 is considered as closest prior art.

## SUMMARY OF THE INVENTION

In view of the above, it is an object of the invention to provide a control apparatus for a vehicle, which can appropriately suppress an excessive change in a vehicle speed when an automatic clutch mechanism is operated while vehicle speed control is performed.

An aspect of the invention relates to a control apparatus for a vehicle, which is applied to a vehicle having an automatic clutch mechanism that interrupts and allows power transmission from an engine to a drive train, and which includes vehicle speed control means for performing an output control that automatically controls a speed of the vehicle by setting a target output of the engine based on a predetermined condition. The control apparatus for a vehicle is characterized by including limiting means for limiting the output control performed by the vehicle speed control means during a period from when disengagement of the automatic clutch mechanism is started until when engagement of the automatic clutch mechanism is completed.

According to the control apparatus for a vehicle which has the aforementioned configuration, since the vehicle speed control means sets the target output of the engine based on the predetermined condition, the speed of the vehicle is automatically controlled. An example of the predetermined condition includes a vehicle speed or a distance between the vehicle and a preceding vehicle. During the period from when disengagement of the automatic clutch mechanism is started until when engagement of the automatic clutch mechanism is completed, power is not sufficiently transmitted from the engine to the drive train. Therefore, the target output which is set based on the predetermined condition may become excessively high. As a result, the vehicle speed may be excessively changed during the period. However, with the aforementioned configuration, the limiting means limits the output control performed by the vehicle speed control means under such a situation. Therefore, the output of the engine is limited, and thus an excessive change in the vehicle speed can be appropriately suppressed when the automatic clutch mechanism is operated while the vehicle speed control is performed. Accordingly, it is possible to suppress occurrence of a situation in which a driver feels uncomfortable due to an excessive change in the vehicle speed, which was not expected by the driver.

Also, the limiting means may limit the output control performed by decreasing an amount by which the target output is increased.

According to the control apparatus for a vehicle which has the aforementioned configuration, the target output is suppressed from being excessively increased during the period from when disengagement of the automatic clutch mechanism is started until when engagement of the automatic clutch mechanism is completed. Therefore, an increase in the output of the engine can be limited, and thus an excessive change in the vehicle speed can be appropriately suppressed when the automatic clutch mechanism is operated while the vehicle speed control is performed.

Also, the limiting means may limit the output control by prohibiting an increase in the target output.

According to the control apparatus for a vehicle which has the aforementioned configuration, an increase in the target output is directly prohibited during the period from when disengagement of the automatic clutch mechanism is started until when engagement of the automatic clutch mechanism is completed. Therefore, an increase in the output of the engine can be prevented, and thus an excessive change in the vehicle speed can be appropriately suppressed when the automatic clutch mechanism is operated while the vehicle speed control is performed. In the aforementioned configuration, the target output which is set based on the predetermined condition may be set so as to decrease. In this case as well, an excessive change in the vehicle speed can be suppressed when the automatic clutch mechanism is operated while the vehicle speed control is performed.

The limiting means may limit the output control by maintaining a target output that is calculated when disengagement of the automatic clutch mechanism is started as the target output in the case where the limiting means limits the output control.

According to the control apparatus for a vehicle which has the aforementioned configuration, the target output is not updated during the period from when disengagement of the automatic clutch mechanism is started until when engagement of the automatic clutch mechanism is completed. Therefore, an increase in the output of the engine can be prevented, and thus an excessive change in the vehicle speed can be appropriately suppressed when the automatic clutch mechanism is operated while the vehicle speed control is performed.

Further, any one of the aforementioned control apparatuses for a vehicle may further include gradual change means for performing a gradual change control which gradually changes the output of the engine after engagement of the automatic clutch mechanism is completed toward the set target output.

For example, in the case where the target output that is set based on the predetermined condition is higher than the actual output of the engine when engagement of the automatic clutch mechanism is completed, if the output of the engine is changed to the target output immediately after engagement of the automatic clutch mechanism is completed, the vehicle may be suddenly accelerated and an excessive change in the vehicle speed may occur. With the aforementioned configuration, the gradual change means gradually changes the output of the engine toward the target output. Therefore, the output of the engine can be suppressed from being abruptly changed. Thus, an excessive change in the vehicle speed can be appropriately suppressed after engagement of the automatic clutch mechanism is completed when the automatic clutch mechanism is operated while the vehicle speed control is performed.

Also, the gradual change means may set a gradual change time period to a variable value according to a difference between the output of the engine when engagement of the automatic clutch mechanism is completed and the set target output in the case where the gradual change means gradually changes the output of the engine.

According to the control apparatus for a vehicle which has the aforementioned configuration, it is possible to appropriately set a period during which the output gradual change control is performed.

The gradual change means may perform the output gradual change control for the engine during a period from when engagement of the automatic clutch mechanism is completed until when a predetermined time period elapses in the case where the gradual change means performs the output gradual change control.

Also, the vehicle speed control means may control the speed of the vehicle based on the set target output after the predetermined time period elapses since engagement of the automatic clutch mechanism is completed.

## BRIEF DESCRIPTION OF THE DRAWINGS

The above and other objects, features, advantages, technical and industrial significance of this invention will be better understood by reading the following detailed description of preferred embodiments of the invention, when considered in connection with the accompanying drawings, in which:

FIG. 1 is a schematic diagram showing an outline of a configuration of a vehicle to which a control apparatus for a vehicle according to an embodiment of the invention is applied;
FIG. 2 is a sectional view showing an outline of a configuration of a clutch installed in the vehicle;
FIG. 3 is a flowchart of a process procedure of an automatic vehicle speed control;
FIG. 4 is a graph showing a structure of a map used for calculating constant speed output torque;
FIG. 5 is a flowchart of a process procedure of a shifting time output control;
FIG. 6 is a graph showing a structure of a map used for calculating shifting output torque;
FIG. 7 is a flowchart showing a process procedure of an output torque control when shifting operation is performed during a cruise control;
FIG 8 is a timing chart showing modes of an output torque control performed by the control apparatus according to the embodiment of the invention;
FIG. 9 is a flowchart showing a process procedure of setting constant speed output torque according to a modified example of the embodiment of the invention; and
FIG. 10 is a flowchart showing a process procedure of setting constant speed output torque according to a modified example of the embodiment of the invention.

## DETAILED DESCRIPTION OF THE PREFERRED EMBODIMENTS

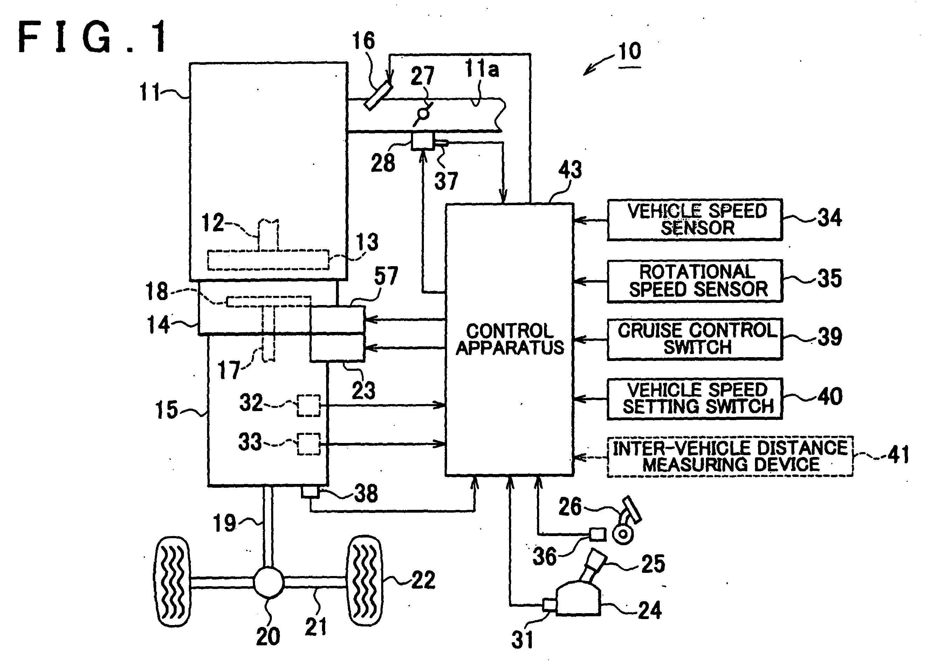

Hereinafter, a control apparatus for a vehicle according to an embodiment of the invention will be described. First, referring to FIG. 1, an outline of a configuration of a vehicle to which the control apparatus according to the embodiment of the invention is applied will be described.

As shown in FIG. 1, a gasoline engine 11 as an engine is installed in a vehicle 10. A throttle valve 27 is provided in an intake passage 11 a in the gasoline engine 11. The throttle valve 27 is opened/closed by driving a motor 28 connected to the throttle valve 27. An amount of air supplied to the gasoline engine 11 is adjusted according to an opening amount of the throttle valve 27. A fuel injection valve 16 is provided in the intake passage 11a. In the gasoline engine 11, an air-fuel mixture of fuel injected from the fuel injection valve 16 and air is burned, and a crankshaft 12 as an output shaft is rotated.

A flywheel 13 is attached to the crankshaft 12 so as to be rotatable integrally with the crankshaft 12. A transmission 15 is connected to the flywheel via a clutch 14. The clutch 14 is used for transmitting rotational torque of the crankshaft 12 to the transmission 15, and for interrupting the transmission of the torque. The concrete configuration of the clutch 14 will be described later in detail.

The transmission 15 has a configuration similar to that of a general manual transmission such as a parallel gear type transmission having forward five speeds and reverse one speed. The transmission 15 includes an input shaft 17 and an output shaft. The input shaft 17 is coupled with a clutch disk 18 of the clutch 14. The rotation of the output shaft is transmitted to driving wheels 22 via a drive shaft 19, a differential gear 20, an axle 21, and the like.

The transmission 15 includes plural sets of shifting gears (for achieving shift speeds) and plural sleeves, in addition to the input shaft 17 and the output shaft. An actuator 23 for the transmission 15 including an electric motor and the like is provided in order to change the shift speed of the transmission 15. Due to the actuation of the actuator 23 for the transmission 15, a sleeve is moved in the axial direction of the output shaft in the transmission 15. Due to the movement of the sleeve, the gears are engaged with each other, and power is transmitted in a certain shifting gear set. Also, when the sleeves are moved to a neutral position in the shifting gear set, power transmission is interrupted.

A shifting device 24 is provided near a driving seat of the vehicle 10. In the shifting device 24, a shift lever 25 is provided so as to be movable along a shift gate. Shifting positions such as a reverse (R) position, a neutral (N) position, a sequential (S) position, a drive (D) position are set in the shift gate, and the driver can move the shift lever 25 to an intended shifting position.

Hereafter, a description will be made of each state where each of the above-mentioned shifting positions is selected, and the operation state of the transmission 15 in the state.

The position "N" is selected when connection between the input shaft 17 and the output shaft of the transmission 15 is interrupted. When the shift lever 25 is operated to the position "N", the transmission 15 is switched to a state where power transmission between the shifting gears is interrupted.

The position "R" is selected when the vehicle 10 is backed up. When the shift lever 25 is operated to the position "R", the shift speed of the transmission 15 is switched to the reverse shift speed.

The position "S" is selected when the shifting operation concerning the plural forward speeds is manually performed by the driver. A position "+" is provided on one side of the position "S", and a position "-" is provided on the other side of the position "S". The shift lever 25 is operated to the position "+" when the shift speed is changed to a higher speed, and the shift lever 25 is operated to the position "-" when the shift speed is changed to a lower speed. In the case where the shift lever 25 is at the position "S", when the shift lever 25 is operated to the position "+" or the position "-" using the position "S" as the center position, plural forward shift speeds of the transmission 15 are changed to a higher speed or to a lower speed. The position "+" is a position for shifting to a higher speed. Each time the shift lever 25 is operated to the position "+", the shift speed is changed to a higher speed by one speed, that is, the shift speed is changed to a higher speed side where a shifting ratio is small by one speed. On the other hand, the position "-" is a position for shifting to a lower speed. Each time the shift lever 25 is operated to the position "-", the shift speed is changed to a lower speed by one speed, that is, the shift speed is changed to a lower speed side where a shifting ratio is large by one speed.

The position "D" is selected when the above-mentioned shifting operation is not performed by the driver through the operation of the shift lever 25, and the shifting operation is automatically performed according to the operation state of the vehicle 10 and the depressing amount of the accelerator pedal 26. When the position "D" is selected, the transmission 15 functions as a so-called automatic transmission.

Various sensors for detecting the operation state of the vehicle 10 and the operation state of the gasoline engine 11 are provided in the vehicle 10. For example, a shifting position sensor 31 for detecting a position of the shift lever 25 is provided in the shifting device 24. A stroke sensor 32 for detecting a shift direction of a gear and a stroke sensor 33 for detecting a select direction of the gear are provided in the transmission 15. The stroke sensors 32 and 33 detect the selected shift speed of the transmission 15. In addition, a vehicle speed sensor 34 for detecting a running speed (a vehicle speed V) of the vehicle 10, and a rotational speed sensor 35 for detecting a rotational speed of the crankshaft 12 (an engine speed NE) are provided. Further, an accelerator opening sensor 36 for detecting a depressing amount of the accelerator 26 (an accelerator opening ACCP) is provided near the accelerator pedal 26.

Further, a throttle sensor 37 for detecting an opening amount of the throttle valve 27 (a throttle opening TA), a rotational speed sensor 38 for detecting a rotational speed of the input shaft 17 (an input rotational speed NI) of the transmission 15, and the like are provided.

Meanwhile, a cruise control switch 39 is provided in a vehicle compartment, and is operated by the driver when performing a so-called cruise control which allows the vehicle to run at a constant speed. A vehicle speed setting switch 40 is operated by the driver when setting a target vehicle speed PV during the cruise control.

Meanwhile, in the embodiment of the invention, a control apparatus 43 is provided. The control apparatus 43 mainly includes a microcomputer, and receives signals detected by the sensors 31 to 38, and signals indicating the ON/OFF state of the aforementioned switches 39 and 40. Based on the signals, a central processing unit (CPU) of the control apparatus 43 performs computation according to a control program, initial data, a control map and the like which are stored in read only memory (ROM) as storing means, and performs various types of control based on the result of the computation. The computation result obtained by the CPU is temporarily stored in random access memory (RAM).

Examples of the various types of control are a control of the clutch 14 performed through the control of an actuator 57 for the clutch 14, a control for changing the shift speed of the transmission 15 performed through the control of the actuator 23 for the transmission 15, a control of an opening amount of the throttle valve 27 performed through the control of the motor 28, and a control of a fuel injection amount of the fuel injection valve 16.

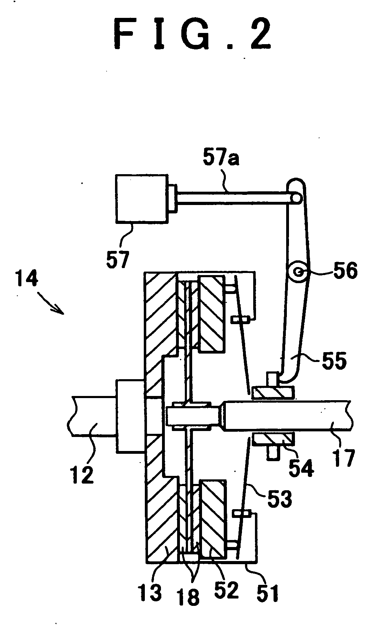

Next, a concrete configuration of the clutch 14 will be described with reference to FIG. 2. As shown in FIG. 2, a clutch cover 51 is attached to the flywheel 13 coupled with the crankshaft 12 so as to be rotatable integrally with the flywheel 13. The clutch disk 18 is spline-coupled with the input shaft 17 of the transmission 15. The clutch disk 18 can slide in the axial direction (the lateral direction in FIG. 2) while rotating integrally with the input shaft 17.

A pressure plate 52 is provided between the clutch disk 18 and the clutch cover 51. The pressure plate 52 is pressed to the flywheel 13 side by an outer end portion of a diaphragm spring 53. Due to the pressing, a frictional force is generated between the clutch disk 18 and the pressure plate 52, and between the flywheel 13 and the clutch disk 18. Due to the frictional force, the clutch 14 is engaged, and the flywheel 13, the clutch disk 18 and the pressure plate 52 integrally rotate. Thus, power is transmitted from the gasoline engine 11 to the drive train (clutch, transmission, etc.), that is, from the gasoline engine 11 to the transmission 15. The torque to be transmitted from the gasoline engine 11 to the transmission 15 via the clutch 14 due to the power transmission is referred to as "clutch torque". The clutch torque is substantially "0" when the clutch 14 is disengaged. The clutch torque is increased as the clutch 14 is gradually engaged and slip of the clutch disk 18 is decreased. Finally, when the clutch 14 is completely engaged, the clutch torque is equal to the rotational torque of the crank shaft 12.

Meanwhile, the operation for engaging/disengaging the clutch 14, which is performed when the vehicle 10 is started or the shifting of the transmission 15 is performed, is performed automatically by the automatic clutch mechanism based on the engine speed NE and the like.

The automatic clutch mechanism will be described. A release bearing 54 for adjusting a degree of the power transmission or for interrupting the power transmission is attached to the input shaft 17 so as to be slidable in the axial direction of the input shaft 17. A release fork 55 which is rotatably supported by a shaft 56 is provided near the release bearing 54, and an end portion (a lower end portion in FIG. 2) of the release fork 55 contacts the release bearing 54. To the other end portion (an upper end portion in FIG 2) of the release fork 55, a piston 57a of the actuator 57 for the clutch 14 including an electric motor and the like is connected.

When the actuator 57 for the clutch 14 is driven, and the piston 57a is moved such that the piston 57a further protrudes from the actuator 57, the release fork 55 rotates in a clockwise direction, and the release bearing 54 is pressed to the flywheel 13 side. When the release bearing 54 moves to the flywheel 13 side, the inner end portion of the diaphragm spring 53, that is, the end portion of the diaphragm spring 53 which contacts the release bearing 54 is deformed elastically to the flywheel 13 side. As a result, the pressing force of the pressure plate 52 due to the diaphragm spring 53 is reduced, and the frictional force is reduced. Thus, the clutch 14 is disengaged.

In the embodiment, the relationship between the stroke amount of the piston 57a and the engagement state of the clutch 14 is as follows. The position of the piston 57a when the clutch 14 is completely engaged is referred to as the reference position "0". As the stroke amount increases, the amount of the protrusion of the piston 57a from the actuator 27 increases, and the clutch 14 is gradually disengaged.

In the clutch 14 according to the embodiment, the frictional force is changed according to the driving amount of the actuator 57 for the clutch 14, that is, the stroke amount of the piston 57a. The stroke amount is adjusted by the control apparatus 43 such that the disengaged clutch 14 is engaged efficiently and in a desired manner.

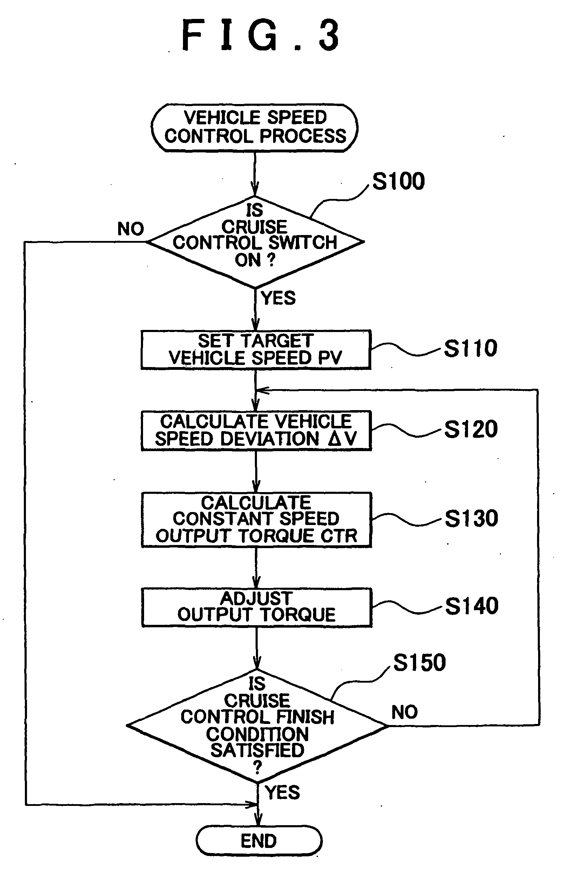

Next, description will be made of a constant speed running control which is performed by the control apparatus 43 constituting the vehicle speed control means, that is, a process procedure of an automatic vehicle speed control during the cruise control, with reference to FIG. 3.

After the process is started, first, it is determined whether the cruise control switch 39 is ON (S100). If the cruise control switch 39 is OFF, that is, the cruise control is not required by the driver (NO in step S100), the process is finished. If the cruise control switch 39 is ON, that is, the cruise control is required by the driver (YES in step S100), the target vehicle speed PV is set (S110). The target vehicle speed PV is set to an actual vehicle speed V when the vehicle setting switch 40 is turned ON by the driver.

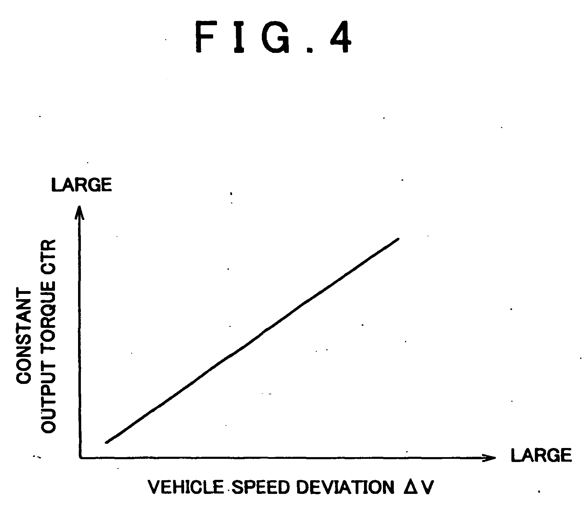

Next, a vehicle speed deviation $\Delta V$ between the actual vehicle speed V and the target vehicle speed PV is calculated (S120), and output torque for a constant speed (hereinafter, referred to as "constant speed output torque") CTR according to the vehicle speed deviation $\Delta V$ is set based on a constant speed output torque setting map shown in FIG. 4 (S130). The constant speed output torque setting map is set such that the constant speed output torque CTR increases with an increase in the vehicle speed deviation $\Delta V$

Next, the output torque of the gasoline engine 11 is adjusted so as to be equal to the constant speed output torque CTR (S140). The opening amount of the throttle valve 27 is adjusted so as to be an opening amount corresponding to the constant speed output torque CTR.

Next, it is determined whether a condition for finishing the cruise control (hereinafter, referred to as "cruise control finish condition") is satisfied (S150). When a predetermined cruise control finish condition is satisfied, that is, a condition that the cruise control switch 39 is OFF, a condition that a brake pedal is depressed, a condition that the vehicle speed deviation $\Delta V$ is equal to or larger than a predetermined value, or the like is satisfied, an affirmative determination is made. When the cruise control finish condition is not satisfied (NO in step S150), steps S120 to S150 are repeatedly performed, and the vehicle runs at a constant speed which is close to the aforementioned target vehicle speed PV.

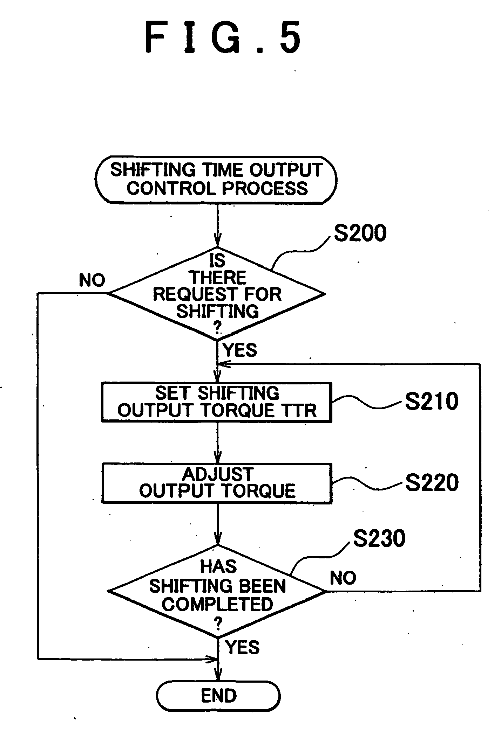

When the cruise control finish condition is satisfied (YES in step S150), the process is finished. That is, the cruise control is cancelled. Meanwhile, when shifting operation of the transmission 15 is performed, the clutch 14 is disengaged and engaged, and the output torque of the gasoline engine 11 is controlled. Description will be made of a process procedure of a shifting time output control, with reference to FIG. 5. The shifting time output control is performed also by the control apparatus 43.

After the process is started, first, it is determined whether there is a request for shifting (S200). When it is determined that there is a request for shifting based on the fact that the shift lever 25 is operated to the position "+" or the position "-", or when it is determined that there is a request for upshifting or downshifting based on the operating state of the vehicle 10 (the vehicle speed or the like), a depression amount of the accelerator pedal 26, or the like, an affirmative determination is made. When it is determined that there is no request for shifting, that is, when the clutch 14 is not operated (NO in step S200), the process is finished.

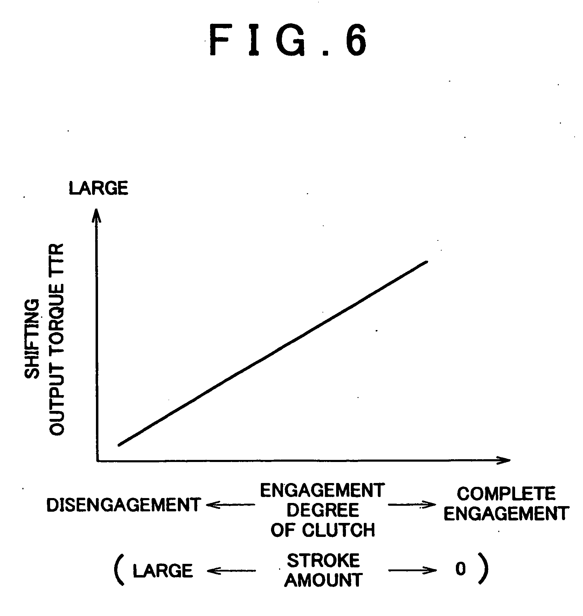

When there is a request for shifting, that is, when the clutch 14 is operated (YES in step S200), an engagement degree of the clutch 14, that is, output torque for shifting (hereinafter, referred to as "shifting output torque") TTR corresponding to the stroke amount of the actuator 57 for the clutch 14 is set based on a shifting output torque setting map shown in FIG. 6 (S210). The shifting output torque setting map is set such that the output torque decreases when the clutch 14 is disengaged, and the output torque increases according to the engagement degree of the clutch 14 when the clutch is engaged. In other words, the shifting output torque setting map is set such that the stroke amount of the actuator 57 for the clutch 14 increases, the shifting output torque TTR decreases on the whole.

Next, the output torque of the gasoline engine 11 is adjusted so as to be equal to the shifting output torque TTR (S220). The opening amount of the throttle valve 27 is adjusted so as to be an opening amount corresponding to the shifting output torque TTR.

Next, it is determined whether shifting has been completed (S230). When the stroke amount of the actuator 57 for the clutch 14 is 0, that is, when the clutch 14 is completely engaged, an affirmative determination is made. When shifting has not been completed (NO in step S230), steps S210 to S230 are repeatedly performed, and the output torque of the engine is controlled according to the engagement degree of the clutch 14. When shifting has been completed (YES in step S230), the process is finished.

Thus, the output torque of the gasoline engine 11 is controlled based on the constant speed output torque CTR, irrespective of the operation of the accelerator pedal 26 during the cruise control.

In the embodiment of the invention, the output torque is controlled when shifting operation is performed during the cruise control. First, when a request for shifting is made, the mode of the output torque control is changed from the aforementioned vehicle speed control to the shifting time output control. Even after the mode of the control is changed, the calculation of the constant speed output torque CTR in the vehicle control process is continued. Also, when the shifting output torque TTR is calculated in the shifting time output control, the shifting output torque TTR that is set during a period from when engagement of the clutch 14 is started until when engagement of the clutch 14 is completed is increased toward the constant speed output torque CTR that is calculated when engagement of the clutch 14 is completed, referring to the constant speed output torque CTR that is calculated while the clutch is being engaged. By performing such a control, a sudden change in the output torque is suppressed when the clutch 14 is completely engaged.

Since power transmission is interrupted and allowed by the clutch 14 during shifting operation, the output of the gasoline engine 11 cannot be completely transmitted to the driving wheels 22 during the period from when disengagement of the clutch 14 is started until when engagement of the clutch 14 is completed. Since such a phenomenon in which drive force is not completely transmitted occurs, even if the output of the gasoline engine 11 is controlled based on the vehicle speed deviation $\Delta V$, it is not possible to make the actual vehicle speed V close to the target vehicle speed PV, and the constant speed output torque CTR may be excessively increased. When the constant speed output torque CTR has been excessively increased, the shifting output torque TTR is excessively increased while the clutch 14 is being engaged. As a result, the vehicle speed may excessively change while the clutch 14 is being engaged or when engagement of the clutch 14 is completed even during the vehicle speed control. As a result, a situation may occur, in which the driver feels uncomfortable due to an excessive change in the vehicle speed, which was not expected by the driver.

Accordingly, the control apparatus for a vehicle according to the embodiment of the invention includes limiting means for limiting calculation of the constant speed output torque CTR during the period from when disengagement of the clutch 14 is started until when engagement of the clutch 14 is completed, whereby occurrence of the aforementioned situation is suppressed.

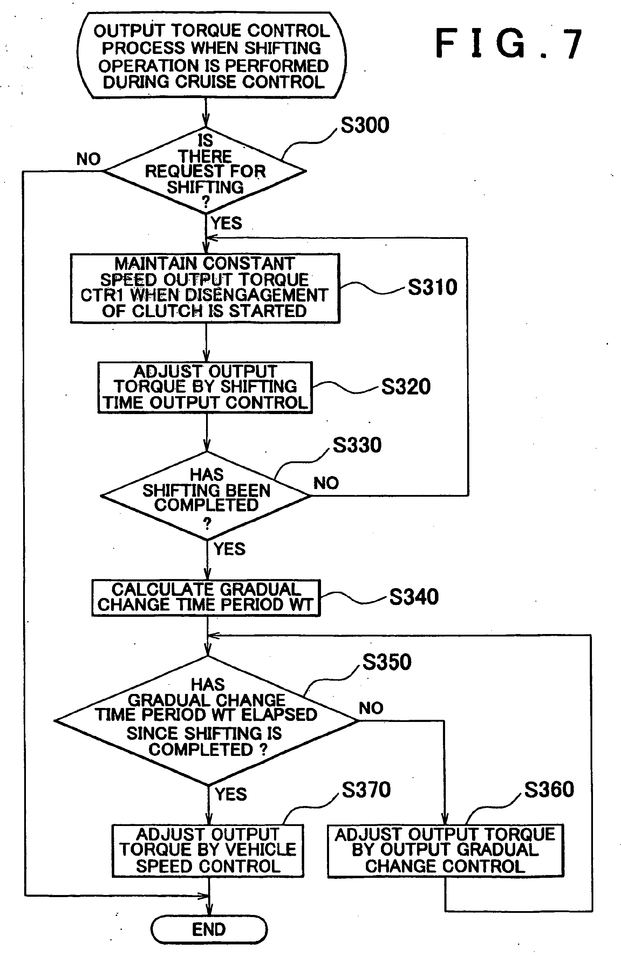

Hereinafter, description will be made of the process procedure of the output torque control when the shifting operation is performed during the cruise control, with reference to FIG. 7. The control process is performed also by the control apparatus 43.

After the process is started, first, it is determined whether there is a request for shifting (S300). The determination in step S300 is the same as that in step S200 in FIG. 5. When there is no request for shifting (NO in step S300), the process is finished, and the output torque is adjusted by the aforementioned vehicle speed control.

When there is a request for shifting (YES in step S300), the calculation of the constant speed output torque is suppressed. More specifically, a constant speed output torque CTR1 which is calculated when disengagement of the clutch 14 is started (S310) is maintained as the constant speed output torque CTR. Then, the output torque is adjusted by the shifting output control that has been described with reference to FIG. 5 (S320). However, in the shifting time output control in this output torque control process, the shifting output torque TTR which is set during the period from when engagement of the clutch 14 is started until when engagement of the clutch 14 is completed is increased toward the constant speed output torque CTR1.

Next, it is determined whether shifting has been completed (S330). The determination in step S330 is the same as that in step S230 in FIG. 5. When shifting has not been completed (NO in step S330), step S310 and step S320 are repeatedly performed until shifting is completed, and the constant speed output torque CTR1 is maintained as the constant speed output torque CTR during the period from when disengagement of the clutch 14 is started until when engagement of the clutch 14 is completed.

When shifting has been completed (YES in step S330), the control apparatus 43 constituting the gradual change means adjusts the output torque. In this gradual change control, a constant speed output torque CTR2 is calculated based on the vehicle speed deviation $\Delta V$ when shifting is completed. Then, target output torque is set to output gradual change torque NTR obtained by gradually increasing the constant speed output torque CTR1 toward the constant speed output torque CTR2, and the output of the gasoline engine 11 is adjusted based on the output gradual change torque NTR. In this output gradual change control, the output gradual torque NTR is updated using the following equation (1) every predetermined time T such that the constant speed output torque CTR1 is gradually increased toward the calculated constant speed output torque CTR2. The output gradual change torque $NTR_{n-1}$ is output gradual change torque that was calculated previous time, and the initial value is the constant speed output torque CTR1. Also, an increase value $\alpha$ is a fixed value that is used for increasing the output gradual change torque NTR every predetermined time T. The increase value $\alpha$ is set to an appropriate value such that the vehicle can be smoothly accelerated.

$$NTR = NTR_{n-1} + \alpha \quad (1)$$

When this output gradual change control is started, first, a gradual change time period WT is calculated using the following equation (2) (S340). The gradual time period WT is a time period during which the constant speed output torque CTR1 is increased to the constant speed output torque CTR2. The gradual time period WT indicates a gradual change speed.

$$WT = \{(CTR2 - CTR1) / \alpha\} \times T \quad (2)$$

Next, it is determined whether the gradual change time period WT has elapsed since the clutch 14 is completely engaged and shifting is completed (S350). When the following conditional equation (3) is satisfied, that is, when a time AT that has elapsed since shifting is completed is equal to or longer than the gradual change time period WT, an affirmative determination is made. As the difference between the constant speed output torque CTR1 and the constant speed output torque CTR2 decreases, the gradual change time period WT obtained using the equation (2) decreases, and therefore an affirmative determination is more likely to be made based on the conditional equation (3).

The time AT that has elapsed since shifting is completed

$$\geq \text{The gradual change time period WT} \quad (3)$$

When the gradual change time period WT has not elapsed since shifting is completed (NO in step S350), the output torque is adjusted by the output gradual change control (S360). Then, a determination is made in step S350 again. The output torque is adjusted by adjusting the opening amount of the throttle valve 27 to an opening amount corresponding to the output gradual change torque NTR.

When the gradual change time period WT has elapsed since shifting is completed (YES in step S350), the output torque starts to be adjusted again by the vehicle speed control, that is, the output torque starts to be adjusted based on the vehicle speed deviation $\Delta V$ (S370). Then, the process is finished.

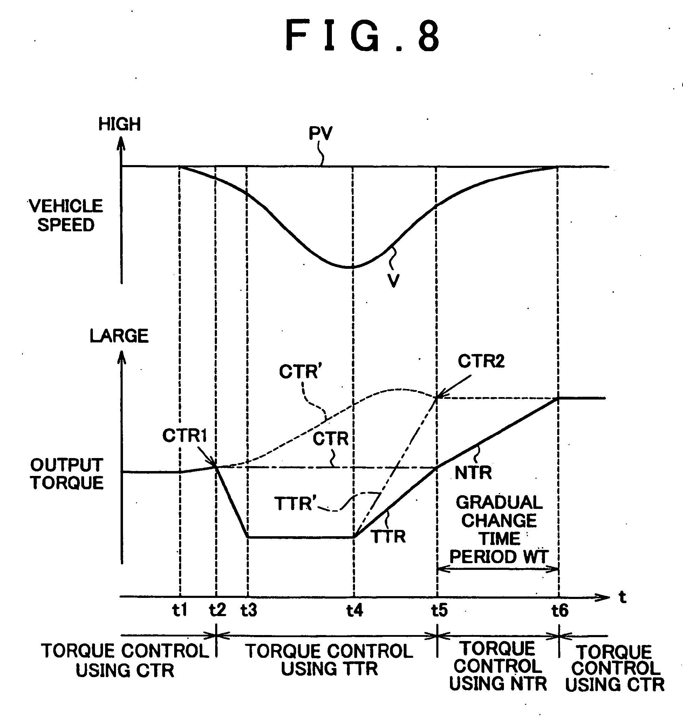

Next, description will be made of modes of the output torque control performed by the control apparatus according to the embodiment of the invention, with reference to a timing chart shown in FIG. 8. FIG 8 shows a change in the output torque when the shifting operation is performed during the cruise control. In FIG. 8, the target vehicle speed PV is set before time t1.

First, in the case where the vehicle speed starts to decrease when the vehicle runs on an ascending slope or the like (time t1), the constant vehicle output torque CTR is calculated based on the vehicle speed deviation $\Delta V$, and the output torque of the gasoline engine 11 is increased. At this time, in the case where an amount by which the vehicle speed decreases due to a large gradient of a running road or the like is larger than an amount by which the vehicle speed increases due to an increase in the output torque, the actual vehicle speed V further decreases. Also, when the actual vehicle speed V decreases to a vehicle speed at which downshifting of the transmission 15 is required (time t2), disengagement of the clutch 14 is started based on the request for shifting, and the constant speed output torque CTR1 that is calculated when disengagement of the clutch 14 is started is maintained as the constant speed output torque CTR. Also, the mode of the output torque control is changed from the vehicle speed control to the shifting time output control based on the request for shifting. Therefore, the output torque is abruptly decreased due to disengagement of the clutch 14.

Next, when the clutch 14 is completely disengaged (time t3), the decreased output torque is maintained, and the shift speed in the transmission 15 is changed toward a lower speed side by one speed. After the change in the shift speed is completed, engagement of the clutch 14 is started (time t4), and the output torque is gradually increased. While the output torque is being increased, the shifting output torque TTR is increased considering the constant speed output

EP 1 462 293 B1

torque CTR as described above.

In the case where the process of setting the constant speed output torque CTR during shifting according to the embodiment of the invention, which has been described with reference to FIG. 7, is not performed, the constant speed output torque CTR is constantly updated based on the vehicle speed deviation $\Delta V$ during the period from when disengagement of the clutch 14 is started until when engagement of the clutch 14 is completed. Therefore, as shown by a dotted line in FIG. 8, the constant speed output torque CTR would be set to a constant speed output torque CTR' which is an extremely large value, due to the aforementioned phenomenon in which the drive force is not completely transmitted. As a result, the shifting output torque TTR' would be increased toward the constant speed output torque CTR' to an extremely large extent, as shown by a chain double dashed line in FIG 8, which may cause an excessive change in the vehicle speed.

In the case where the process of setting the constant speed output torque CTR during shifting according to the embodiment of the invention is performed, the constant speed output torque CTR that is calculated when disengagement of the clutch 14 is started is maintained as the constant speed output torque CTR during the period from when disengagement of the clutch 14 is started until when engagement of the clutch 14 is completed, as shown by a dashed line in FIG. 8. Accordingly, the constant speed output torque CTR is not set to an extremely large value during the period from when disengagement of the clutch 14 is started until when engagement of the clutch 14 is completed, and the shifting output torque TTR is increased toward the maintained constant speed output torque CTR1 while the clutch 14 is being engaged. Thus, an excessive change in the vehicle speed is unlikely to occur.

When the clutch 14 is completely engaged at time t5, the constant speed output torque CTR2 is calculated based on the vehicle speed deviation $\Delta V$ at time t5. Also, the gradual change time period WT (i.e., the time period from time t5 till time t6) is calculated based on the calculated constant speed output torque CTR2 and the aforementioned maintained constant speed output torque CTR1. Also, the aforementioned output gradual change torque NTR is set as a target value of the output torque after engagement of the clutch 14 is completed, and the output torque is gradually increased every predetermined time T. Then, after engagement of the clutch 14 is completed, the gradual change time period WT elapses, and the output gradual change torque NTR becomes equal to the constant speed output torque CTR2 (time t6). Then, the mode of the output torque control is changed from the output gradual change control to the constant speed running control based on the vehicle speed deviation $\Delta V$. Thus, even in the case where there is a difference between the constant speed output torque CTR2 when engagement of the clutch 14 is completed (at time t5) and the constant speed output torque CTR1, since the output torque is gradually increased, an excessive change in the vehicle speed can be suppressed after engagement of the clutch 14 is completed.

As the difference between the constant speed output torque CTR2 and the constant speed output torque CTR1 decreases, the gradual change time period WT decreases, as apparent from the equation (2). Accordingly, as the difference therebetween decreases, that is, as an excessive change in the vehicle speed is more unlikely to occur even if the constant speed output torque CTR1 is changed to the constant speed output torque CTR2, the output control for the gasoline engine 11 is more quickly changed to the vehicle speed control based on the vehicle speed deviation $\Delta V$.

As described above, according to the embodiment of the invention, the following effects can be obtained.

(1) The calculation of the constant speed output torque CTR is limited during the period from when disengagement of the clutch 14 is started until when engagement of the clutch 14 is completed. More specifically, the constant speed output torque CTR1 that is calculated when disengagement of the clutch 14 is started is maintained as the constant speed output torque CTR during the period from when disengagement of the clutch 14 is started until when engagement of the clutch 14 is completed. Therefore, the constant speed output torque corresponding to the vehicle speed deviation $\Delta V$ is not updated during the aforementioned period in which power cannot be sufficiently transmitted from the gasoline engine 11 to the drive train. Accordingly, an increase in the output of the gasoline engine 11 can be prevented, and an excessive change in the vehicle speed can be appropriately suppressed when the clutch 14 is operated during the vehicle speed control. As a result, it is possible to suppress occurrence of the situation in which the driver feels uncomfortable due to an excessive change in the vehicle speed, which was not expected by the driver.

(2) The output gradual change torque NTR is set as the target output of the gasoline engine 11 during the period from when the clutch 14 is completely engaged until when the gradual change time period WT elapses. Therefore, even in the case where there is a difference between the constant speed output torque CTR2 and the constant speed output torque CTR1 when engagement of the clutch 14 is completed, the output torque of the gasoline engine 11 is gradually increased, and a sudden change in the output can be suppressed. Accordingly, an excessive change in the vehicle speed can be appropriately suppressed after engagement of the clutch 14 is completed in the case where the clutch 14 is operated during the vehicle speed control.

(3) After the clutch 14 is completely engaged, the output gradual change control is performed until the gradual change time period WT elapses. Then, the gradual change time period WT used for the output gradual change control is set so as to be variable based on the difference between the constant speed output torque CTR2 and the constant speed output torque CTR1.

(4) After the gradual change time period WT elapses since the clutch 14 is completely engaged, the mode of

9

the output torque control is changed from the output gradual change control to the vehicle speed control based on the vehicle speed deviation ΔV. Accordingly, since the vehicle speed control based on the vehicle speed deviation ΔV is restarted when the output gradual change torque NTR reaches the constant speed output torque CTR2, the vehicle speed control can be appropriately restarted after engagement of the clutch 14 is completed.

In the aforementioned embodiment of the invention, the following modifications can be made.

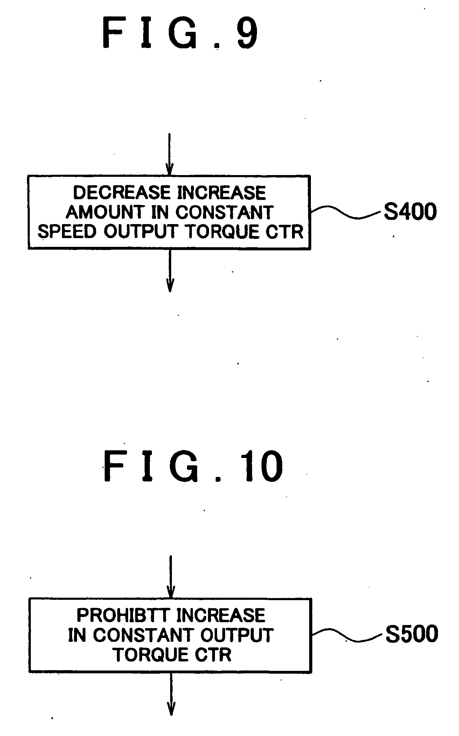

Instead of step S310 in FIG. 7, step S400 in FIG. 9 may be performed such that an increase amount of the constant speed output torque CTR that is calculated during the period from when disengagement of the clutch 14 is started until when engagement of the clutch 14 is completed is decreased. In this case, an excessive increase in the constant speed output torque CTR is suppressed during the period from when disengagement of the clutch 14 is started until when engagement of the clutch 14 is completed. Therefore, an increase in the output of the gasoline engine 11 can be limited, and an excessive change in the vehicle speed can be appropriately suppressed when the clutch 14 is operated during the vehicle speed control.

Instead of step S310 in the embodiment of the invention, step S500 in FIG. 10 may be performed such that an increase in the constant speed output torque CTR is prohibited during the period from when disengagement of the clutch 14 is started until when engagement of the clutch 14 is completed. In this case, an increase in the constant speed output torque CTR is directly prohibited during the period from when disengagement of the clutch 14 is started until when engagement of the clutch 14 is completed. Therefore, an increase in the output of the engine can be prevented, and an excessive change in the vehicle speed can be appropriately suppressed when the automatic clutch mechanism is operated during the vehicle speed control.

In this modified example, the constant speed output torque CTR may be set to decrease during the period from when disengagement of the clutch 14 is started until when engagement of the clutch 14 is completed. In this case as well, an excessive change in the vehicle speed can be suppressed when the clutch 14 is operated during the vehicle speed control.

In most cases, the period from when disengagement of the clutch 14 is started until when engagement of the clutch 14 is completed is short, and a decrease amount of the actual vehicle speed is not so large during the period. Therefore, even if the aforementioned output gradual change control is omitted, and the shifting time output control is promptly changed to the vehicle speed control immediately after engagement of the clutch 14 is completed, an excessive change in the vehicle speed is unlikely to occur in general. Therefore, step S340 and subsequent steps in the aforementioned embodiment of the invention may be omitted, and the output torque may be controlled by the vehicle speed control when an affirmative determination is made in step S330. In this case, the vehicle speed control is promptly started immediately after engagement of the clutch 14 is completed, and the actual vehicle speed V can be promptly changed toward the target vehicle speed PV.

The invention can be similarly applied if the following mode of the output control for the gasoline engine 11 is performed in the case where disengagement and engagement of the clutch 14 are performed during the cruise control. In the mode of the output control, the shifting output torque TTR is increased according to the engagement degree of the clutch 14 without referring to the constant speed output torque CTR while the clutch 14 is being engaged. Then, when the clutch 14 is completely engaged, the target output of the gasoline engine 11 is changed to the constant speed output torque CTR. In this case as well, since an increase in the constant speed output torque CTR is suppressed during the period from when disengagement of the clutch 14 is started until when engagement of the clutch 14 is completed, an excessive change in the vehicle speed can be suppressed immediately after engagement of the clutch 14 is completed. Also, in the case where there is a difference between the constant speed output torque CTR1 immediately after engagement of the clutch 14 is completed and the constant speed output torque CTR after engagement of the clutch 14 is completed, an excessive change in the vehicle speed can be suppressed by the aforementioned output gradual change control.

In the aforementioned embodiment of the invention, the increase value α is a fixed value. However, the increase value α may be a variable value that is set according to the running state of the vehicle. For example, the increase value α may be set to a larger value as the difference between the constant speed output torque CTR2 and the constant speed output torque CTR1 is larger, whereby the actual vehicle speed V can be promptly increased toward the target vehicle speed PV.

In the embodiment of the invention, the increase value α may be set to a fixed value by setting the gradual change time period WT to a fixed value, and dividing the difference between the constant speed output torque CTR1 and the constant speed output torque CTR2 by the gradual change time period WT. In this case, the increase value α, which is set to a variable value, indicates the gradual change speed.

The output gradual change control in the embodiment of the invention may be any control as long as the control can gradually increase the output of the gasoline engine 11 such that the driver does not feel uncomfortable. For example, the output gradual change control may gradually increase the output of the gasoline engine 11 using first order delay control, second order delay control, or smoothing control, or the like.

In the aforementioned embodiment of the invention, the invention is applied to a vehicle which has a function of allowing the vehicle to run at a constant speed. However, the invention can be applied to a vehicle which includes an inter-vehicle distance measuring device (laser radar, or the like) 41 for measuring an inter-vehicle distance between the vehicle and a preceding vehicle, and which has a function of controlling the vehicle speed such that the inter-vehicle distance matches a predetermined distance. In this case, effects similar to those in the aforementioned embodiment can be obtained.

In the aforementioned embodiment of the invention, the output of the gasoline engine 11 is adjusted by the opening amount of the throttle valve 27. However, the output of the engine may be adjusted by increasing or decreasing the fuel injection amount of the fuel injection valve in the case where the engine is a diesel engine or other cases. In these cases, effects similar to those in the aforementioned embodiment can be obtained.

In the aforementioned embodiment of the invention, description has been made of the effects of the invention in the case where the target vehicle speed PV is a fixed speed, and the actual vehicle speed V changes. Meanwhile, in the case where the target vehicle speed PV is changed by operating an accelerator lever for cruise control, or the like during the cruise control, it is possible to obtain effects similar to those in the aforementioned embodiment and the modified examples thereof by employing the modes of the output torque control.

In the embodiment of the invention, the invention is applied to an internal combustion engine. However, the invention can be applied to a control apparatus for an automatic clutch mechanism for a vehicle in which a gas-turbine engine, an electric motor, or the like is installed as the engine. That is, the invention can be applied to any engine as long as the engine can drive the vehicle 10.

A vehicle (10) includes a clutch (14) which interrupts and allows power transmission from an engine to a drive train. A control apparatus (43) includes vehicle speed control means for performing an output control which automatically controls a speed of the vehicle (10) by setting a target output of a gasoline engine (11) based on a predetermined condition. The control apparatus (43) includes limiting means for limiting the output control performed by the vehicle speed control means during a period from when disengagement of the clutch (14) is started until when engagement of the clutch (14) is completed. With the control apparatus for a vehicle having the aforementioned configuration, it is possible to appropriately suppress an excessive change in a vehicle speed in the case where a clutch (14) is operated while a vehicle speed control is performed.

A vehicle (10) includes a clutch (14) which interrupts and allows power transmission from an engine to a drive train. A control apparatus (43) includes vehicle speed control means for performing an output control which automatically controls a speed of the vehicle (10) by setting a target output of a gasoline engine (11) based on a predetermined condition. The control apparatus (43) includes limiting means for limiting the output control performed by the vehicle speed control means during a period from when disengagement of the clutch (14) is started until when engagement of the clutch (14) is completed. With the control apparatus for a vehicle having the aforementioned configuration, it is possible to appropriately suppress an excessive change in a vehicle speed in the case where the clutch (14) is operated while a vehicle speed control is performed.

**Claims**

1. A control apparatus for a vehicle, which is applied to a vehicle having an automatic clutch mechanism (14) that interrupts and allows power transmission from an engine (11) to a drive train, and which includes vehicle speed control means for performing an output control that automatically controls a speed (V) of the vehicle (10) by setting a target output (CTR) of the engine (11) based on a predetermined condition, **characterized by** further comprising:

   limiting means for limiting the output control performed by the vehicle speed control means during a period from when disengagement of the automatic clutch mechanism (14) is started (t2) until when engagement of the automatic clutch mechanism (14) is completed (t5).

2. The control apparatus for a vehicle according to claim 1, **characterized in that** the limiting means decreases an amount by which the target output (CTR) is increased.

3. The control apparatus for a vehicle according to claim 1, **characterized in that** the limiting means prohibits an increase in the target output (CTR).

4. The control apparatus for a vehicle according to claim 1, **characterized in that** the limiting means maintains a target output (CTR1) that is calculated when disengagement of the automatic clutch mechanism (14) is started (t2) as the target output (CTR) in a case where the limiting means limits the output control.

5. The control apparatus for a vehicle according to any one of claims 1 through 4, **characterized by** further comprising:

gradual change means for performing a gradual change control which gradually changes the output of the engine (11) after engagement of the automatic clutch mechanism (14) is completed (t5) toward the set target output (CTR2).

6. The control apparatus for a vehicle according to claim 5, **characterized in that** the gradual change means sets a gradual change time period (WT) to a variable value according to a difference between the output of the engine (11) when engagement of the automatic clutch mechanism (14) is completed (t5) and the set target output (CTR2) in a case where the gradual change means gradually changes the output of the engine (11).

7. The control apparatus for a vehicle according to claim 5 or 6, **characterized in that** the gradual change means performs the output gradual change control for the engine (11) during a period from when engagement of the automatic clutch mechanism (14) is completed (t5) until when a predetermined time period (WT) elapses in a case where the gradual change means performs the output gradual change control.

8. The control apparatus for a vehicle according to claim 7, **characterized in that** the vehicle speed control means controls the speed (V) of the vehicle (10) based on the set target output (CTR) after the predetermined time period (WT) elapses since engagement of the automatic clutch mechanism (14) is completed (t5).

**Patentansprüche**

1. Steuergerät für ein Kraftfahrzeug, das bei einem Kraftfahrzeug angewendet wird, das einen automatischen Kupplungsmechanismus (14) aufweist, der eine Kraftübertragung von einem Verbrennungsmotor (11) zu einem Antriebsstrang unterbricht und ermöglicht, und das eine Fahrzeuggeschwindigkeitssteuereinrichtung zum Ausführen einer Leistungsabgabesteuerung aufweist, die in automatischer Weise die Geschwindigkeit (V) des Fahrzeugs (10) steuert, indem eine Sollabgabeleistung (CTR) des Verbrennungsmotors (11) auf der Grundlage eines vorbestimmten Zustandes eingestellt wird,
**dadurch gekennzeichnet, dass**
dieses des Weiteren Folgendes aufweist:

eine Begrenzungseinrichtung zum Begrenzen der Leistungsabgabesteuerung, die durch die Fahrzeuggeschwindigkeitssteuereinrichtung ausgeführt wird, während einer Zeitspanne von dem Zeitpunkt, bei dem das Ausrücken des automatischen Kupplungsmechanismus (14) beginnt (t2), bis zu dem Zeitpunkt, bei dem das Einrücken des automatischen Kupplungsmechanismus (14) vollendet ist (t5).

2. Steuergerät für ein Kraftfahrzeug gemäß Anspruch 1,
**dadurch gekennzeichnet, dass**
die Begrenzungseinrichtung einen Betrag verringert, um den die Sollabgabeleistung (CTR) erhöht wird.

3. Steuergerät für ein Kraftfahrzeug gemäß Anspruch 1,
**dadurch gekennzeichnet, dass**
die Begrenzungseinrichtung eine Zunahme der Sollabgabeleistung (CTR) verhindert.

4. Steuergerät für ein Kraftfahrzeug gemäß Anspruch 1,
**dadurch gekennzeichnet, dass**
die Begrenzungseinrichtung eine Sollabgabeleistung (CTR1), die berechnet wird, wenn das Ausrücken des automatischen Kupplungsmechanismus (14) beginnt (t2), als die Sollabgabeleistung (CTR) in einem Fall beibehält, in dem die Begrenzungseinrichtung die Leistungsabgabesteuerung begrenzt.

5. Steuergerät für ein Kraftfahrzeug gemäß einem der Ansprüche 1 bis 4,
**dadurch gekennzeichnet, dass**
dieses des Weiteren Folgendes aufweist:

eine Einrichtung für eine allmähliche Änderung zum Ausführen einer Steuerung einer allmählichen Änderung, die die Abgabeleistung von dem Verbrennungsmotor (11) nach dem Vollenden des Einrückens des automatischen Kupplungsmechanismus (14) (t5) allmählich zu der festgelegten Sollabgabeleistung (CTR2) ändert.

6. Steuergerät für ein Kraftfahrzeug gemäß Anspruch 5,

**dadurch gekennzeichnet, dass**
die Einrichtung für eine allmähliche Änderung eine Zeitspanne (WT) einer allmählichen Änderung in Übereinstimmung mit einer Differenz zwischen der Abgabeleistung des Verbrennungsmotors (11) zu dem Zeitpunkt, bei dem das Einrücken des automatischen Kupplungsmechanismus (14) vollendet ist (t5), und der eingestellten Sollabgabeleistung (CTR2) in einem Fall, bei dem die Einrichtung für eine allmähliche Änderung die Abgabeleistung von dem Verbrennungsmotor (11) allmählich ändert, auf einen variablen Wert einstellt.

**7.** Steuergerät für ein Kraftfahrzeug gemäß Anspruch 5 oder 6,
**dadurch gekennzeichnet, dass**
die Einrichtung für eine allmähliche Änderung die Leistungsabgabe für eine allmähliche Änderung der Steuerung für den Verbrennungsmotor (11) während einer Zeitspanne von dem Zeitpunkt, bei dem das Einrücken von dem automatischen Kupplungsmechanismus (14) vollendet ist (t5), bis zu dem Zeitpunkt, bei dem eine vorbestimmte Zeitspanne (WT) verstrichen ist, in dem Fall ausführt, in dem die Einrichtung für eine allmähliche Änderung die Leistungsabgabe für eine allmähliche Änderung der Steuerung ausführt.

**8.** Steuergerät für ein Kraftfahrzeug gemäß Anspruch 7,
**dadurch gekennzeichnet, dass**
die Fahrzeuggeschwindigkeitssteuereinrichtung die Geschwindigkeit (V) des Fahrzeugs (10) auf der Grundlage von der eingestellten Sollabgabeleistung (CTR) steuert, nachdem die vorbestimmte Zeitspanne (WT) seit der Vollendung des Einrückens des automatischen Kupplungsmechanismus (14) verstrichen ist (t5).

**Revendications**

**1.** Dispositif de commande pour un véhicule, qui est appliqué à un véhicule comportant un mécanisme d'embrayage automatique (14) qui interrompt et autorise la transmission de puissance d'un moteur (11) à une transmission, et qui comprend des moyens de commande de vitesse de véhicule pour effectuer une commande de sortie qui commande automatiquement une vitesse (V) du véhicule (10) en fixant une sortie cible (CTR) du moteur (11) sur la base d'une condition prédéterminée, **caractérisé en ce qu'**il comprend en outre :

des moyens de limitation pour limiter la commande de sortie effectuée par les moyens de commande de vitesse de véhicule pendant une période de l'instant auquel le désengagement du mécanisme d'embrayage automatique (14) est débuté (t2) jusqu'à l'instant auquel l'engagement du mécanisme d'embrayage automatique (14) est achevé (t5).

**2.** Dispositif de commande pour un véhicule selon la revendication 1, **caractérisé en ce que** les moyens de limitation diminuent une quantité de laquelle la sortie cible (CTR) est augmentée.

**3.** Dispositif de commande pour un véhicule selon la revendication 1, **caractérisé en ce que** les moyens de limitation interdisent une augmentation de la sortie cible (CTR).

**4.** Dispositif de commande pour un véhicule selon la revendication 1, **caractérisé en ce que** les moyens de limitation maintiennent une sortie cible (CTR1) qui est calculée à l'instant auquel le désengagement du mécanisme d'embrayage automatique (14) est débuté (t2) en tant que sortie cible (CTR) dans un cas où les moyens de limitation limitent la commande de sortie.

**5.** Dispositif de commande pour un véhicule selon l'une quelconque des revendications 1 à 4, **caractérisé en ce qu'**il comprend en outre :

des moyens de modification graduelle pour effectuer une commande de modification graduelle qui modifie graduellement la sortie du moteur (11) une fois que l'engagement du mécanisme d'embrayage automatique (14) est achevé (t5) vers la sortie cible fixée (CTR2).

**6.** Dispositif de commande pour un véhicule selon la revendication 5, **caractérisé en ce que** les moyens de modification graduelle fixent une période de temps de modification graduelle (WT) à une valeur variable en fonction d'une différence entre la sortie du moteur (11) lorsque l'engagement du mécanisme d'embrayage automatique (14) est achevé (t5) et la sortie cible fixée (CTR2) dans un cas où les moyens de modification graduelle modifient graduellement la sortie du moteur (11).

**7.** Dispositif de commande pour un véhicule selon la revendication 5 ou 6, **caractérisé en ce que** les moyens de modification graduelle effectuent la commande de modification graduelle de sortie pour le moteur (11) pendant une période de l'instant auquel l'engagement du mécanisme d'embrayage automatique (14) est achevé (t5) jusqu'à l'instant auquel une période de temps prédéterminée (WT) s'est écoulée dans un cas où les moyens de modification graduelle effectuent la commande de modification graduelle de sortie.

**8.** Dispositif de commande pour un véhicule selon la revendication 7, **caractérisé en ce que** les moyens de commande de vitesse de véhicule commandent la vitesse (V) du véhicule (10) sur la base de la sortie cible fixée (CTR) après que la période de temps prédéterminée (WT) se soit écoulée depuis l'achèvement (t5) de l'engagement du mécanisme d'embrayage automatique (14).

FIG. 1

VEHICLE SPEED SENSOR — 34

ROTATIONAL SPEED SENSOR — 35

CRUISE CONTROL SWITCH — 39

VEHICLE SPEED SETTING SWITCH — 40

INTER-VEHICLE DISTANCE MEASURING DEVICE — 41

CONTROL APPARATUS

10

43

11a

27

16

28

37

12

13

57

18

14

17

23

32

33

15

38

26

36

25

24

31

19

20

21

22

# F I G . 2

# F I G . 3

VEHICLE SPEED
CONTROL PROCESS

S100

IS
CRUISE
CONTROL SWITCH
ON ?

NO

YES

SET TARGET
VEHICLE SPEED PV — S110

CALCULATE VEHICLE
SPEED DEVIATION ΔV — S120

CALCULATE
CONSTANT SPEED
OUTPUT TORQUE CTR — S130

ADJUST
OUTPUT TORQUE — S140

S150

IS
CRUISE
CONTROL FINISH
CONDITION
SATISFIED
?

NO

YES

END

# F I G . 4

LARGE

CONSTANT
OUTPUT TORQUE CTR

LARGE

VEHICLE SPEED DEVIATION ΔV

# F I G . 5

```
         ┌──────────────────────────┐
         │  SHIFTING TIME OUTPUT    │
         │    CONTROL PROCESS       │
         └──────────────────────────┘
                      │
                      ▼            ╭── S200
                   ╱  IS  ╲
          NO    ╱  THERE   ╲
        ◄──────  REQUEST FOR
                ╲  SHIFTING ╱
                   ╲   ?  ╱
                      │ YES
                      ▼
         ┌──────────────────────────┐
         │      SET SHIFTING        │ ─── S210
         │   OUTPUT TORQUE TTR      │
         └──────────────────────────┘
                      │
                      ▼
         ┌──────────────────────────┐
         │        ADJUST            │ ─── S220
         │    OUTPUT TORQUE         │
         └──────────────────────────┘
                      │
                      ▼            ╭── S230
                   ╱  HAS  ╲
                ╱ SHIFTING BEEN ╲   NO
                ╲  COMPLETED   ╱ ──►
                   ╲   ?   ╱
                      │ YES
                      ▼
               ┌─────────────┐
               │     END     │
               └─────────────┘
```

# F I G . 6

LARGE

SHIFTING OUTPUT TORQUE TTR

DISENGAGEMENT ⟵ ENGAGEMENT DEGREE OF CLUTCH ⟶ COMPLETE ENGAGEMENT

( LARGE ⟵ STROKE AMOUNT ⟶ 0 )

# FIG.7

```
OUTPUT TORQUE CONTROL
PROCESS WHEN SHIFTING
OPERATION IS PERFORMED
DURING CRUISE CONTROL
```

S300

IS THERE REQUEST FOR SHIFTING ?

NO → (loop)

YES

MAINTAIN CONSTANT SPEED OUTPUT TORQUE CTR1 WHEN DISENGAGEMENT OF CLUTCH IS STARTED — S310

ADJUST OUTPUT TORQUE BY SHIFTING TIME OUTPUT CONTROL — S320

S330

HAS SHIFTING BEEN COMPLETED ?

NO

YES

CALCULATE GRADUAL CHANGE TIME PERIOD WT — S340

S350

HAS GRADUAL CHANGE TIME PERIOD WT ELAPSED SINCE SHIFTING IS COMPLETED ?

NO

YES

S370

ADJUST OUTPUT TORQUE BY VEHICLE SPEED CONTROL

S360

ADJUST OUTPUT TORQUE BY OUTPUT GRADUAL CHANGE CONTROL

END

21

# FIG.8

# F I G . 9

DECREASE INCREASE
AMOUNT IN CONSTANT
SPEED OUTPUT TORQUE CTR ⟩ S400

# F I G . 10

PROHIBTT INCREASE
IN CONSTANT OUTPUT
TORQUE CTR ⟩ S500

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001200866 A

- US 4899623 A